(19) Europäisches Patentamt
European Patent Office
Office européen des brevets

(11) **EP 4 411 470 A1**

(12) **EUROPEAN PATENT APPLICATION**
published in accordance with Art. 153(4) EPC

(43) Date of publication:
**07.08.2024 Bulletin 2024/32**

(21) Application number: **22873150.1**

(22) Date of filing: **20.09.2022**

(51) International Patent Classification (IPC):
*G02F 1/137* (2006.01)          *G02B 5/30* (2006.01)
*G02F 1/1335* (2006.01)          *G02F 1/1337* (2006.01)

(52) Cooperative Patent Classification (CPC):
**G02B 5/30; G02F 1/1335; G02F 1/1337; G02F 1/137**

(86) International application number:
**PCT/KR2022/014003**

(87) International publication number:
**WO 2023/048445 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 KR 20210127369**

(71) Applicant: **Dongwoo Fine-Chem Co., Ltd.**
**Iksan-si, Jeollabuk-do 54631 (KR)**

(72) Inventor: **RYU, Hyun-Sun**
**Pyeongtaek-si, Gyeonggi-do 17807 (KR)**

(74) Representative: **Betten & Resch**
**Patent- und Rechtsanwälte PartGmbB**
**Maximiliansplatz 14**
**80333 München (DE)**

(54) **OPTICAL LAMINATE AND MANUFACTURING METHOD THEREFOR, SMART WINDOW COMPRISING SAME, AND DOOR AND WINDOW FOR AUTOMOBILE AND BUILDING USING SAME**

(57)    The present invention relates to a variable transmittance optical laminate and a manufacturing method therefor, a smart window comprising same, and a door and window for an automobile and a building to which same is applied. The variable transmittance optical laminate comprises: a first polarizing plate; a first transparent conductive layer formed on one surface of the first polarizing plate; a second polarizing plate facing the first polarizing plate; a second transparent conductive layer formed on one surface of the second polarizing plate and facing the first transparent conductive layer; and a liquid crystal layer provided between the first transparent conductive layer and the second transparent conductive layer, wherein at least one transparent conductive layer of the first transparent conductive layer and the second transparent conductive layer is formed in direct contact with any one of the first polarizing plate and the second polarizing plate, includes a conductive polymer, and has at least one value of 0 to 0.05 among crack density values calculated according to Equation 1 below at a tensile strain of greater than 1% and less than or equal to 10%.
[Equation 1] $\rho(\varepsilon) = \ell(\varepsilon)/A$ (where $\varepsilon$ is tensile strain (%), A is the area of an observation region (mm$^2$), $\rho(\varepsilon)$ is a crack density value of the transparent conductive layer calculated at the tensile strain $\varepsilon$, and $\ell(\varepsilon)$ is a crack area of the transparent conductive layer in the observation region A measured at the tensile strain $\varepsilon$ (mm$^2$).

FIG. 1

## Description

### Technical Field

The present disclosure relates to a variable transmittance optical stack, a manufacturing method therefor, a smart window including the same, and windows and doors for a vehicle and a building using the same.

### Background Art

In general, there are many cases in which an external light blocking coating is applied to a window of a means of transportation such as a vehicle. However, a transmittance of a conventional window of a means of transportation is fixed, and a transmittance of the external light blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a variable transmittance optical stack capable of changing a transmittance of light when a voltage is applied has been developed.

The variable transmittance optical stack is driven by changing the transmittance by driving liquid crystal according to voltage application. The variable transmittance optical stack developed so far is manufactured by forming a conductive layer for driving liquid crystal on a separate or additional substrate, and then combining the conductive layer with other elements such as a polarizing plate.

For example, Japanese Patent Publication Application No. 2018-010035 discloses a variable transmittance optical stack including a transparent electrode layer formed on a polycarbonate (PC) substrate having a predetermined thickness.

However, when a separate or additional substrate is included to form the conductive layer as described above, as a manufacturing process becomes complicated, manufacturing costs is increased, the thickness of the stack is increased, and the transmittance is changed due to occurrence of retardation.

Indium tin oxide (ITO), an electrode material mainly used in the transparent electrode layer, is an inorganic oxide and has characteristics in that cracks is easily generated and surface resistance is increased even under small changes in external stress, which is a disadvantage in manufacturing various types of optical stacks.

Therefore, there is a need for development of a variable transmittance optical stack with a simplified manufacturing process, a reduced thickness, without easy occurrence of cracks even with changes in external stress, and with less change in surface resistance, by not including a separate or additional substrate for forming a conductive layer.

### Disclosure

### Technical Problem

The present disclosure is intended to provide a variable transmittance optical stack including a conductive layer containing a conductive polymer material, thereby preventing occurrence of a crack in the conductive layer according to external stress variation.

Another objective of the present disclosure is to provide a variable transmittance optical stack including a conductive layer containing a conductive polymer material, thereby reducing a surface resistance increase rate of the conductive layer according to external stress variation.

Yet another objective of the present disclosure is to provide a variable transmittance optical stack having a simplified manufactured process without a separate or additional substrate for forming a conductive layer.

Still another objective of the present disclosure is to provide a variable transmittance optical stack having a thickness significantly reduced without a separate or additional substrate for forming a conductive layer.

Still another objective of the present disclosure is to provide a variable transmittance optical stack having an improved transmittance thereof in a light transmissive mode without a separate or additional substrate for forming a conductive layer.

Still another objective of the present disclosure is to provide a smart window including the variable transmittance optical stack, and windows and doors for a vehicle or a building to which the same is applied.

However, the problem to be solved by the present disclosure is not limited to the problems mentioned above, and other problems not mentioned will be clearly understood by those skilled in the art from the description below.

**Technical Solution**

The present disclosure relates to a variable transmittance optical stack including: a first polarizing plate; a first transparent conductive layer formed on one surface of the first polarizing plate; a second polarizing plate opposing the first polarizing plate; a second transparent conductive layer formed on one surface of the second polarizing plate, and opposing the first transparent conductive layer; and a liquid crystal layer provided between the first transparent conductive layer and the second transparent conductive layer, wherein at least one transparent conductive layer of the first transparent conductive layer and the second transparent conductive layer may be formed by directly contacting with any one polarizing plate of the first polarizing plate and the second polarizing plate, at least one transparent conductive layer of the first transparent conductive layer and the second transparent conductive layer may include conductive polymers, and at least one transparent conductive layer of the first transparent conductive layer and the second transparent conductive layer may have at least one value of 0 to 0.05 among crack density values calculated according to following Equation 1, at a tensile strain greater than 1% and less than or equal to 10%.

$$[\text{Equation 1}]$$

$$\rho(\varepsilon) = \ell(\varepsilon)/A$$

(In Equation 1, $\varepsilon$ is tensile strain (%), A is an area ($mm^2$) of an observed region, $\rho(\varepsilon)$ is a crack density value of the transparent conductive layer calculated at the tensile strain $\varepsilon$, and $\ell(\varepsilon)$ is a crack area ($mm^2$) of the transparent conductive layer in the observed region A calculated at the tensile strain $\varepsilon$.)

In a first aspect of the present disclosure, at least one transparent conductive layer of the first transparent conductive layer and the second transparent conductive layer may have a crack density value of 0, which is calculated according to Equation 1 when $\varepsilon$ is 2%.

In a second aspect of the present disclosure, at least one transparent conductive layer of the first transparent conductive layer and the second transparent conductive layer may have at least one increase rate of 15% or less among surface resistance increase rates calculated according to following Equation 2, at the tensile strain equal to or greater than 1% and equal to or less than 10%.

$$[\text{Equation 2}]$$

$$\delta(\varepsilon) = [\{R.S(\varepsilon)/R.S(0)\}-1] * 100$$

(in Equation 2, $\delta(\varepsilon)$ is a surface resistance increase rate (%) of the transparent conductive layer calculated at the tensile strain $\varepsilon$, R.S($\varepsilon$) is a surface resistance value ($\Omega/\square$) of the transparent conductive layer measured from tensile strain $\varepsilon$, R.S(0) is a surface resistance value ($\Omega/\square$) of the transparent conductive layer measured from an initial state where the tensile strain is at 0%, and $\varepsilon$ has the same meaning as Equation 1.)

In a third aspect of the present disclosure, at least one transparent conductive layer of the first transparent conductive layer and the second transparent conductive layer may have a surface resistance increase rate of 15% or less, which is calculated according to the Equation 2, when $\varepsilon$ is 1%.

In a fourth aspect of the present disclosure, the conductive polymers may include one or more types selected from a group consisting of polythiophene, poly(3,4-ethylene dioxythiophene), polyaniline, polyacetylene, polydiacetylene, polyphenylene, polyphenylenevinylene, polyphenylene sulfide, polythienylene vinylene, polythiophene vinylene, polyfluorene, polypyrrole, poly(3,4-ethylene dioxythiophene): polystyrene sulfonate, poly(3,4-ethylene dioxythiophene): camphor sulfonic acid, poly(3,4-ethylene dioxythiophene):toluenesulfonic acid, poly(3,4-ethylene dioxythiophene): dodecylbenzene sulfonic acid, polyaniline: polystyrene sulfonate, polyaniline: camphor sulfonic acid, polypyrrole: polystyrene sulfonate, polypyrrole: camphor sulfonic acid, polypyrrole:toluenesulfonic acid, polypyrrole: dodecylbenzene sulfonic acid, polythiophene: polystyrene sulfonate, polythiophene: camphor sulfonic acid, polythiophene:toluenesulfonic acid, and polythiophene: dodecylbenzene sulfonic acid.

In a fifth aspect of the present disclosure, at least one transparent conductive layer of the first transparent conductive layer and the second transparent conductive layer may be formed by directly contacting with at least one polarizing plate of the first polarizing plate and the second polarizing plate without a separate or additional substrate between the polarizing plate and the transparent conductive layer.

In a sixth aspect of the present disclosure, at least one transparent conductive layer of the first transparent conductive layer and the second transparent conductive layer may be formed by directly contacting with any one polarizing plate of the first polarizing plate and the second polarizing plate with a highly adhesive layer between the polarizing plate and the transparent conductive layer.

In a seventh aspect of the present disclosure, at least one polarizing plate of the first polarizing plate and the second polarizing plate may include one or more types of functional layers selected from a group consisting of a protective layer, a retardation matching layer, and a refractive index-matching layer.

In an eighth aspect of the present disclosure, the first polarizing plate and the second polarizing plate may have a thickness ranging from $30\mu m$ to $200\mu m$.

In a ninth aspect of the present disclosure, the liquid crystal layer may include one or more types selected from a group consisting of a ball spacer and a column spacer.

In a tenth aspect of the present disclosure, the ball spacer may have a diameter ranging from $1 \mu m$ to $10\mu m$.

In an eleventh aspect of the present disclosure, an occupancy area of the ball spacer in the liquid crystal layer may range from 0.01 to 10% of the area of the liquid crystal layer.

In a twelfth aspect of the present disclosure, the variable transmittance optical stack may include one or more types selected from a group consisting of an alignment film, a pressure sensitive adhesive/adhesive layer, an ultraviolet ray absorption layer, and a hard coating layer.

The present disclosure relates to a manufacturing method for the variable transmittance optical stack.

The present disclosure relates to a smart window including the variable transmittance optical stack.

The present disclosure relates to an automobile in which the smart window is applied to at least one of a front window, a rear window, a side window, a sunroof window, and an inner partition thereof.

The present disclosure relates to a window and a door for a building including a smart window.

## Advantageous Effects

According to the variable transmittance optical stack according to the present disclosure, the conductive layer contains a conductive polymer material to prevent cracks from occurring in response to change in external stress, so that the driving stability for various forms can be improved in comparison to the conventional optical stack.

According to the variable transmittance optical stack according to the present disclosure, the conductive layer contains a conductive polymer material to reduce a surface resistance increase rate in response to change in external stress, so that the driving stability for various forms can be improved in comparison to the conventional optical stack.

The variable transmittance optical stack according to the present disclosure can have the manufacturing process simplified in comparison to the conventional optical stack by omitting the process of forming a conductive layer on a separate or additional substrate for forming the conventional optical stack and bonding the conductive layer and other members.

The variable transmittance optical stack according to the present disclosure can be significantly reduced in the thickness thereof in comparison to the thickness of the conventional optical stack without a separate or additional substrate for forming the conductive layer as the conductive layer is directly formed on one surface of the polarizing plate.

The variable transmittance optical stack according to the present disclosure can have the transmittance in the light transmissive mode improved in comparison to the thickness of the conventional optical stack, without a separate or additional substrate for forming the conductive layer as the conductive layer is directly formed on one surface of the polarizing plate.

## Description of Drawings

FIG. 1 is a view showing a stack structure of a variable transmittance optical stack according to an embodiment of the present disclosure.

FIGS. 2A to 2C are views each showing a stack structure of a polarizing plate according to one or a plurality of embodiments of the present disclosure.

FIG. 3 is a view showing a method for measuring a crack area of a transparent conductive layer according to an embodiment of the present disclosure.

FIGS. 4A and 4B are views each showing a stack structure of a variable transmittance optical stack according to another embodiment of the present disclosure.

FIGS. 5A and 5B are views each showing an image of the transparent conductive layer in an observed region captured using an optical microscope in each tensile strain, with respect to an electrode stack member according to an example and a comparative example of the present disclosure.

**Best Mode**

The present disclosure relates to a variable transmittance optical stack including at least one transparent conductive layers containing conductive polymers. Specifically, the present disclosure relates to a variable transmittance optical stack, wherein a transparent conductive layer for driving liquid crystal is directly formed on one surface of a polarizing plate so that the optical stack does not include a separate or additional substrate for forming the conductive layer and a thickness of the stack is reduced and transmittance in a light transmissive mode is improved, and the transparent conductive layer contains conductive polymers so that occurrence of cracks in response to change in external stress can be prevented and a surface resistance increase rate can be reduced.

More specifically, the present disclosure relates to a variable transmittance optical stack including: a first polarizing plate; a first transparent conductive layer formed on one surface of the first polarizing plate; a second polarizing plate opposing the first polarizing plate; a second transparent conductive layer formed on one surface of the second polarizing plate, and opposing the first transparent conductive layer; and a liquid crystal layer provided between the first transparent conductive layer and the second transparent conductive layer, wherein at least one transparent conductive layer of the first transparent conductive layer and the second transparent conductive layer is formed by directly contacting with at least any one polarizing plate of the first polarizing plate and the second polarizing plate, and at least one transparent conductive layer of the first transparent conductive layer and the second transparent conductive layer contains a conductive polymer, and at least one transparent conductive layer of the first transparent conductive layer and the second transparent conductive layer has at least one value ranging from 0 to 0.05, among crack density values calculated by equation 1, in a tensile strain greater than 1% and less than or equal to 10%.

$$[\text{Equation 1}]$$

$$\rho(\varepsilon) = \ell(\varepsilon)/A$$

(In the Equation 1, the $\varepsilon$ is tensile strain (%), the A is an area ($mm^2$) of an observed region, the $\rho(\varepsilon)$ is a crack density value of the transparent conductive layer calculated at the tensile strain $\varepsilon$, and the $\ell(\varepsilon)$ is a crack area ($mm^2$) of the transparent conductive layer in the observed region A calculated at the tensile strain $\varepsilon$.)

The variable transmittance optical stack of the present disclosure is particularly suitable for technical fields where a light transmittance can be changed in response to application of voltage, for example, may be used for a smart window, etc.

In the present disclosure, the smart window may be an optical structure controlling the amount of light or heat passing through the window by changing a light transmittance in response to an electrical signal, and the present disclosure is not limited thereto. In other words, the smart window of the present disclosure is provided to be changed into a transparent, opaque or translucent state by voltage and conceptually includes variable transmittance glass, lighting control glass, or smart glass.

The smart window may be used as partitions for partitioning an internal space of vehicles and buildings or for protecting privacy, or as skylights arranged in openings of buildings, and may be used as highway signs, noticeboards, scoreboards, clocks or advertising screens, and may be used to replace glass of a means of transportation, such as windows or sunroof windows of cars, buses, aircrafts, ships, or trains.

The variable transmittance optical stack of the present disclosure may also be used for the smart window of the various technical fields mentioned above, but since the conductive layer is directly formed in the polarizing plate, there is no need to include a separate or additional substrate for forming the conductive layer and the thickness thereof is thin and is advantageous in the flexuosity, so the optical stack of the present disclosure may be used to be particularly suitable for a smart window of a vehicle or a building. According to one or a plurality of embodiments, the smart window to which the variable transmittance optical stack of the present disclosure is applied may be used for front windows, rear windows, side windows, and sunroof windows of a vehicle, or windows and doors for a building, and the smart window may be used to not only an external light blocking use, but also an internal space partitioning use or a privacy protecting use such as an inner partition for a vehicle or a building.

Hereinbelow, embodiments of the present disclosure will be described in detail with reference to drawings. However, the following drawings accompanying this specification illustrate preferred embodiments of the present disclosure, and serve to further understand the technical idea of the present disclosure with the contents of the above-described invention. Therefore, the present disclosure should not be construed as being limited to matters described in the drawings.

Terms used in this specification are selected to describe embodiments and thus do not limit the present disclosure. In this specification, an element expressed in a singular form may be plural elements unless it is necessarily singular in the context. For example, "a polarizing plate" used in the specification may be at least one polarizing plate of a first polarizing plate and a second polarizing plate. Furthermore, "a transparent conductive layer" may be at least one transparent conductive layer of a first transparent conductive layer and a second transparent conductive layer.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms "below", "lower surface", "lower portion", "above", "upper surface", "upper portion" may be used to easily describe the correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" concerning another element may be placed "on" the another element. Accordingly, the exemplary term "below" may include both downward and upward directions. An element may be aligned in a different direction, and accordingly, the spatially relative terms may be interpreted according to alignment.

The "planar direction" used in this specification may be interpreted as a direction perpendicular to a polarizing plate and/or a transparent conductive layer, that is, a direction viewed from the user's view side.

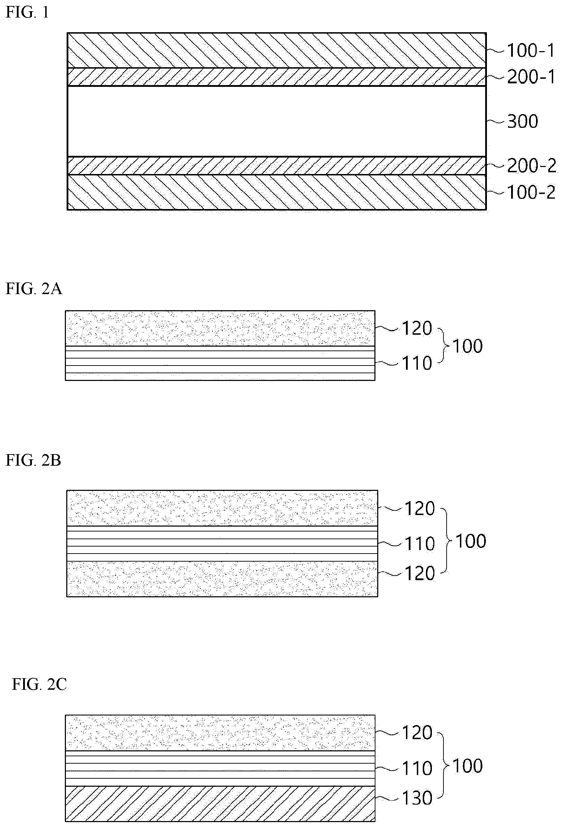

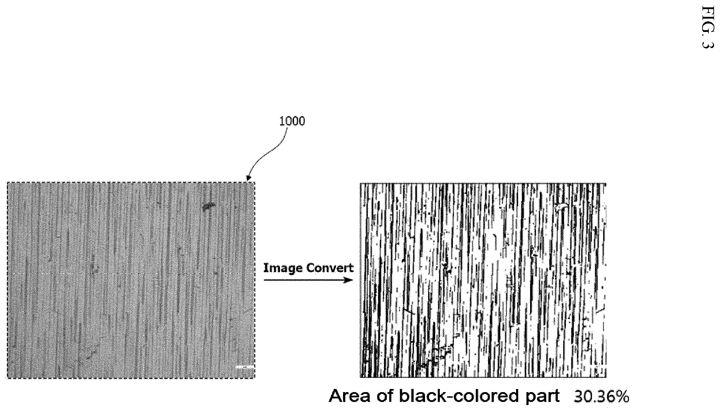

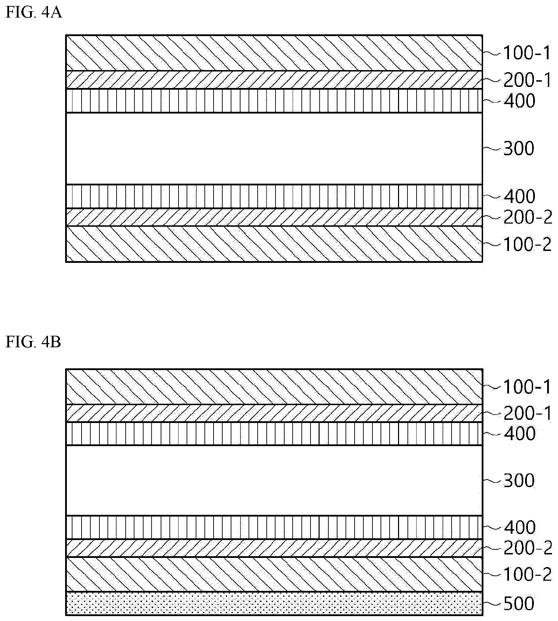

FIG. 1 is a view showing a stack structure of a variable transmittance optical stack according to an embodiment of the present disclosure. FIGS. 2A to 2E are views each showing a stack structure of a polarizing plate according to one or a plurality of embodiments of the present disclosure. FIG. 3 is a view showing a method for measuring a crack area of a transparent conductive layer according to an embodiment of the present disclosure. FIGS. 4A and 4B are views each showing a stack structure of a variable transmittance optical stack according to another embodiment of the present disclosure.

Referring to FIG. 1, the variable transmittance optical stack according to the embodiment of the present disclosure includes a first polarizing plate 100-1, a second polarizing plate 100-2, a first transparent conductive layer 200-1, a second transparent conductive layer 200-2, and a liquid crystal layer 300.

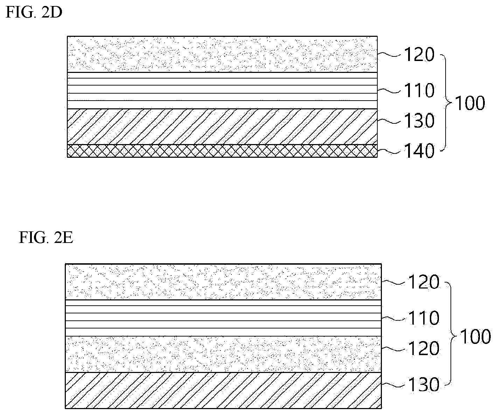

Referring to FIGS. 2A to 2E, the polarizing plate 100 includes a polarizer 110, and on one or both surfaces of the polarizer 110, may include a functional layer such as a protective layer 120, a retardation matching layer 130, a refractive index-matching layer 140, etc. For example, the polarizing plate 100 may include the polarizer 110 and the protective layer 120 stacked on one or both surfaces of the polarizer 110 (referring to FIGS. 2A and 2B), and may include the polarizer 110, the protective layer 120 stacked on a first surface of the polarizer 110, and the retardation matching layer 130 stacked on a second surface of the polarizer 110 (referring to FIG. 2C), the second surface facing the first surface, the polarizer 110, and may include the polarizer 110, the protective layer 120 stacked on the first surface of the polarizer, and the retardation matching layer 130 and the refractive index-matching layer 140 successively stacked on the second surface of the polarizer 110 (referring to FIG. 2D), the second surface facing the first surface, may include the polarizer 110, the protective layer 120 stacked on the first surface of the polarizer, and the protective layer 120 and the retardation matching layer 130 successively stacked on the second surface of the polarizer 110 (referring to FIG. 2E), the second surface facing the first surface.

The polarizer 110 may use a polarizer currently developed or to be developed, and, for example, may use a stretched polarizer, a coatable polarizer, etc.

According to the embodiment, the stretched polarizer may contain a stretched polyvinyl alcohol (PVA)-based resin. The PVA-based resin may be PVA-based resin obtained by saponifying polyvinyl acetate resin. In addition to polyvinyl acetate that is homopolymer of vinyl acetate, vinyl acetate and a copolymer with other monomers that can be copolymerized with vinyl acetate may be used as the polyvinyl acetate-based resin. As the other monomers, unsaturated carboxylic acid-based monomers, unsaturated sulfonic acid-based monomers, olefin-based monomers, vinyl ether-based monomers, acrylamide having ammonium groups-based monomers, and the like may be used. Furthermore, the PVA-based resin contains a denatured resin, and for example, may be polyvinyl formal or polyvinyl acetal denatured into aldehyde.

According to the embodiment, the coatable polarizer may be formed of a composition for liquid crystal coating, and, at this point, the composition for liquid crystal coating may contain reactive liquid crystal compound, and dichroic dye, etc.

The reactive liquid crystal compound may mean a compound, for example, containing a mesogen frame, etc., and also containing one or more polymerizable functional groups. The reactive liquid crystal compound may be variously known by the name reactive mesogen (RM). The reactive liquid crystal compound may constitute a cured film with a polymer network formed while being polymerized by light or heat and maintaining a liquid crystal arrangement.

The reactive liquid crystal compound may be a mono-functional liquid crystal compound or a multi-functional liquid crystal compound. The mono-functional liquid crystal compound is a compound having 1 polymerizable functional group, and a multi-functional liquid crystal compound may mean a compound having two or more polymerizable functional groups.

The dichroic dye is a substance contained in the composition for liquid crystal coating to impart the polarization characteristic and has a property in which absorbance in a direction of the long axis of a molecule and absorbance in a direction of the short axis are different. The dichroic dyes may be dichroic dyes currently developed or to be developed and may contain one or more types of dyes selected from a group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

The composition for liquid crystal coating may contain a solvent capable of dissolving the reactive liquid crystal compound and the dichroic dye. For example, propylene glycol monomethyl ether acetate (PGMEA), methyl ethyl ketone (MEK), xylene, chloroform, and the like may be used. Furthermore, the composition for liquid crystal coating may contain leveling agents, a polymerization initiator, etc. within a range that does not deteriorate the polarization properties of a coating film.

The protective layer 120 is provided to preserve the polarization characteristic of the polarizer 110 from a post-processing and external environment and may be implemented into a form such as a protective film, etc.

As shown in FIGS. 2A and 2B, the protective layer 120 may be formed by directly contacting with one or both surfaces of the polarizer 110 but is not limited thereto. For example, the protective layer may be used as a double-layer structure in which one or more protective layers are successively stacked and may be formed in direct contact with another functional layer.

According to one or a plurality of embodiments, the protective layer may contain one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

The retardation matching layer 130 may be provided to complement optical properties of the optical stack, and may be implemented in a retardation film, and a retardation film currently developed or to be developed may be used therefor. For example, a quarter-wave plate (1/4 wave plate) or a half-wave plate (1/2 wave plate) may be used to delay a retardation of light and may be used alone or in combination.

As shown in FIGS. 2C and 2D, the retardation matching layer 130 may be formed by directly contacting with one surface of the polarizer 110 but is not limited thereto. For example, as shown in FIG. 2E, the retardation matching layer 130 is formed on one surface of the protective layer 120, and the polarizer 110, the protective layer 120, and the retardation matching layer 130 may be successively stacked.

The retardation matching layer 130 may be a polymer stretched film or a liquid crystal polymerized film, formed by stretching a polymer film that can impart optical anisotropy by stretching in an appropriate manner.

According to the embodiment, the polymer stretched film may use a polymer layer containing polyolefin such as polyethylene (PE), polypropylene (PP), etc., cyclo olefin polymer (COP) such as polynorbornene, etc., polyester such as polyvinyl chloride (PVC), polyacrylonitrile (PAN), polysulfone (PSU), acryl resin, polycarbonate (PC), polyethylene terephthalate (PET), etc.; and/or cellulose ester polymer such as polyacrylate, polyvinyl alcohol (PVA), triacetyl cellulose (TAC), etc., or a copolymer of two or more monomers among monomers that can form the polymers.

A method for obtaining the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using a common solvent, for example, a solvent such as chloroform, 2 methylene chloride, etc., and then are solidified in a cast dry manner, and accordingly, the non-stretched film may be cast-molded.

The polymer stretched film may be provided by performing uniaxial stretching with respect to the molded film in a mechanical direction (MD, longitudinal or length direction), and by performing uniaxial stretching in a direction (TD, transverse direction or width direction) perpendicular to the MD, and furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured.

The liquid crystal polymerized film may contain a reactive liquid crystal compound in a polymerized state. The description of the reactive liquid crystal compound of the coatable polarizer described above may be equally applied to the reactive liquid crystal compound.

In one or a plurality of embodiments, the thickness of the retardation matching layer 130 may be a thickness

between 10μm and 100μm in the polymer stretched film and may be a thickness between 0.1μm and 5μm in the liquid crystal polymerized film.

The refractive index-matching layer 140 is provided to compensate for the refractive index difference of the optical stack by the transparent conductive layer 200, and may serve to improve the visible characteristic by reducing the difference of the refractive index. Furthermore, the refractive index-matching layer 140 may be provided to correct a color based on the transparent conductive layer 200. Meanwhile, when the transparent conductive layer has a pattern, the refractive index-matching layer 140 may correct the transmittance difference of a region with the pattern and a non-pattern region without the pattern.

Specifically, the transparent conductive layer 200 is stacked close to other members having a refractive index different therefrom (for example, the polarizer 110, etc.), and due to the difference of the refractive index between the transparent conductive layer and another layer close thereto, the difference of an optical transmittance may be caused. Specifically, when the pattern is formed on the transparent conductive layer, there may be a problem in that the pattern region and the non-pattern region are visually distinguished from each other. Therefore, the refractive index-matching layer 140 is included to compensate for a refractive index, thereby reducing the difference with the optical transmittance of the optical stack. Specifically, when the pattern is formed on the transparent conductive layer, the pattern region and the non-pattern region should be provided so as not to be visually distinguished.

According to the embodiment, the refractive index of the refractive index-matching layer 140 may be appropriately selected according to a material of another adjacent member and may preferably range from 1.4 to 2.6, more preferably may be between 1.4 and 2.4. In this case, it is possible to prevent optical loss due to a sharp difference in the refractive index between another member such as the polarizer 110 and the transparent conductive layer 200.

The refractive index-matching layer 140 is not particularly limited as long as it can prevent the sharply refractive difference between other members, such as the polarizer 110, etc., and the transparent conductive layer, and may use a compound used in the formation of a refractive index-matching layer currently developed or to be developed. For example, the refractive index-matching layer 150 may be formed from refractive index-matching layer formation composition containing polymerizable isocyanate compound.

According to the embodiment, the polarizing plate 100 may include other functional layers to assist or strengthen the characteristics of the polarizer in addition to the above-mentioned functional layers and, for example, may include an overcoat layer, etc. to further improve the mechanical durability.

According to one or a plurality of embodiments, the polarizing plate 100 may have a thickness ranging from 30 to 200 μm, and preferably, a thickness ranging from 30 to 170 μm, and more particularly, a thickness ranging from 50 to 150 μm. In this case, while the polarizing plate 100 maintains the optical characteristic, the optical stack having a thin thickness can be manufactured.

The transparent conductive layer 200 is provided to drive the liquid crystal layer 300, and may be formed by directly contacting with the polarizing plate 100. For example, as shown in FIG. 1, the first transparent conductive layer 200-1 and the second transparent conductive layer 200-2 may be respectively formed by directly contacting with the first polarizing plate 100-1 and the second polarizing plate 100-2.

Conventionally, an optical stack used to manufacture a smart window, etc. is manufactured by forming a conductive layer for driving a liquid crystal on one surface of a substrate and bonding-coupling a second surface of the substrate to a polarizing plate. However, according to the present disclosure, the variable transmittance optical stack has the conductive layer directly formed on one surface of the polarizing plate without a separate or additional substrate for forming the conductive layer, and thus is characterized to improve the transmittance in a light transmissive mode and the curvature characteristic while reducing the entire thickness of the stack.

According to the embodiment, the transparent conductive layer 200 may be formed by being directly deposited on one surface of the polarizing plate 100. At this point, in order to improve the adhesion between the transparent conductive layer 200 and the polarizing plate 100, the transparent conductive layer 200 may be formed by performing pre-processing such as a corona processing or a plasma processing on one surface of each polarizing plate 100, and then directly contacting with the surface of each polarizing plate 100 to which the pre-processing is performed. The pre-processing is not limited to the corona processing or the plasma processing, and may be a pre-processing currently developed or to be developed without harming the purpose of the present disclosure.

According to another embodiment of the present disclosure, in order to improve the adhesion between the transparent conductive layer 200 and the polarizing plate 100, the transparent conductive layer 200 may be formed by directly contacting with each polarizing plate with the highly adhesive layer (not shown) located therebetween, the highly adhesive layer being provided on one surface of each polarizing plate 100.

The transparent conductive layer 200 may have more than 50% transmittance for visible light, and preferably, may contain conductive polymers. In this case, even when deformation due to external stress is applied to a transparent conductive layer, it is possible to prevent a crack from occurring to the transparent conductive layer and to prevent in-plane resistance from excessively increasing.

In an embodiment, the transparent conductive layer 200 may contain conductive polymers, and may have a thickness less than or equal to 1 μm, preferably a thickness ranging from 10nm to 500nm, further preferably a thickness ranging from 30nm to 200nm. In this case, the transparent conductive layer 200 can secure a predetermined transmittance and is not largely changed in properties by the external stress, and allows an optical stack with a thin thickness to be manufactured.

In an embodiment, the transparent conductive layer 200 may contain a conductive polymer, and under tensile strain greater than 1% and less than or equal to 10%, at least one value among crack density values calculated by Equation 1 may range from 0 to 0.05, preferably from 0 to 0.03, more preferably from 0 to 0.01.

[Equation 1]

$$\rho(\varepsilon) = \ell(\varepsilon)/A$$

In Equation 1, the $\varepsilon$ is tensile strain (%), the A is an area ($mm^2$) of an observed region, the $\rho(\varepsilon)$ is a crack density value of the transparent conductive layer calculated at the tensile strain $\varepsilon$, and the $\ell(\varepsilon)$ is a crack area ($mm^2$) of the transparent conductive layer in the observed region A calculated at the tensile strain $\varepsilon$.

Specifically, referring to FIG. 3, the area A may be an area of an observed area 1000 arbitrarily designated by a user to calculate a crack density value of the transparent conductive layer in response to tensile strain, the $\ell(\varepsilon)$ may be an area (30.36% in FIG. 3) of a black part in an shadow image (right) obtained by converting an image (left) of the transparent conductive layer in the observed area 1000 by using an image processing program such as Image J (NIH/LOCI), after the observed area 1000 is captured using an optical Microscope (OM) or a scanning electron microscope (SEM).

Therefore, the closer the crack density value calculated by Equation 1 is to 0, it means that the transparent conductive layer has no crack, and the closer the crack density value is to 1, it can be interpreted that cracks are generated on the entire surface of the transparent conductive layer.

In other words, when the transparent conductive layer 200 has at least one value among crack density values calculated by Equation 1 satisfying the above range in tensile strain greater than 1% and less than or equal to 10%, occurrence of cracks in response to change in external stress can be prevented, and stability in driving the optical stack can be performed even when external stress changes, which is an advantage.

In another embodiment, the transparent conductive layer 200 contains a conductive polymer, and in tensile strain equal to or greater than 1% and less than or equal to 10%, at least one increase rate among surface resistance increase rates calculated by Equation 2 may be less than or equal to 15%, and may preferably range from 0% to 14%.

[Equation 2]

$$\delta(\varepsilon) = [\{R.S(\varepsilon)/R.S(0)\}-1] * 100$$

(in Equation 2, the $\delta(\varepsilon)$ is a surface resistance increase rate (%) of the transparent conductive layer calculated at the tensile strain $\varepsilon$, the R.S($\varepsilon$) is a surface resistance value ($\Omega/\square$) of the transparent conductive layer measured in tensile strain $\varepsilon$, the R.S(0) is a surface resistance value ($\Omega/\square$) of the transparent conductive layer measured from an initial state where the tensile strain is at 0%, and the $\varepsilon$ has the same meaning as Equation 1.)

When the transparent conductive layer 200 has at least one among surface resistance increase rates calculated by Equation 2 satisfying the above range in tensile strain equal to or greater than 1% and less than or equal to 10%, excessive increase of surface resistance in response to change in external stress can be prevented, and stability in driving the optical stack can be performed even when external stress changes, which is an advantage.

The conductive polymer may use a conductive polymer material currently developed or to be developed, and for example, may contain one or more types selected from a group consisting of polythiophene, poly(3,4-ethylenedioxythiophene), polyaniline, polythiophene, polydiacetylene, polyphenylene, polyphenylenevinylene, polyphenylene sulfide, polythienylenevinylene, polythiophenevinylene, polyfluorene, polypyrrole, poly(3,4-ethylenedioxythiophene):poly styrenesulfonate, poly(3,4-ethylenedioxythiophene): camphorsulfonic acid, poly(3,4-ethylenedioxythiophene):toluenesulfonic acid, poly(3,4-ethylenedioxythiophene):dodecylbenzenesulfonic acid, polyaniline:polystyrenesulfonate, polyaniline:camphorsulfonic acid, polypyrrole:polystyrenesulfonate, polypyrrole:camphorsulfonic acid, polypyrrole:toluenesulfonic acid, polypyrrole:dodecylbenzenesulfonic acid, polythiophene: poly styrenesulfonate, polythiophene:camphorsulfonic acid, polythiophene:toluenesulfonic acid, and polythiophene:dodecylbenzenesulfonic acid, and preferably may be poly(3,4-ethylenedioxythiophene).

According to an embodiment, the variable transmittance optical stack of the present disclosure may include a transparent conductive layer containing one or more types selected from a group consisting of transparent conductive oxide, metal, carbonaceous matters, conductive ink, and nanowires, in addition to the transparent conductive layer containing a conductive polymer, and the variable transmittance optical stack may be formed in a structure of two or more layers by combining the layers.

According to one or a plurality of embodiments, the transparent conductive oxide may include one or more types selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of aurum (Au), argentum (Ag), cuprum (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloy containing at least one of them, etc., and for example, may include argentum - palladium - cuprum (APC) alloy or cuprum - calcium (CuCa) alloy. The carbonaceous matter may include one or more types selected from a group consisting of carbon nanotube (CNT), graphene, etc., the conductive ink may be a mixture of metal powder and curable polymer binder, and the nanowires may be for example silver nanowires (AgNW).

The transparent conductive layer 200 may be formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as chemical vapor deposition (CVD), physical vapor deposition (PVD), plasma enhanced chemical vapor deposition (PECVD), etc.

The liquid crystal layer 300 may adjust a transmittance of light incident in one or a plurality of directions according to electric fields to change a driving mode of the optical stack.

The liquid crystal layer 300 may include liquid crystal compounds and, for example, in an optical control region, may be located in a space provided by a sealant layer (not shown) and a spacer (not shown) that are provided between the first polarizing plate 100-1 and the second polarizing plate 100-2.

The liquid crystal compounds are operated in response to electric fields and are not particularly limited as long as it can control transmittance of light, and liquid crystal compounds currently developed or to be developed later may be used and, for example, the description of reactive liquid crystal compound of the above-mentioned coatable polarizer may be equally applied thereto.

A liquid crystal movement method of the liquid crystal layer 300 is not particularly limited and, for example, the twisted nematic (TN) mode, the super twisted nematic (STN) mode, the vertical alignment (VA) mode, etc. may be used.

The sealant may contain curable resins as base resins. As the base resins, UV curable resins or heat curable resins that are known to be usable for sealants in the art may be used. The UV curable resins may be polymers of UV curable monomers. The heat-curable resins may be polymers of heat-curable monomers.

As the base resins of the sealant, for example, acrylate-based resins, epoxy-based resins, urethane-based resins, phenol-based resins, or compounds of these resins may be used. According to an embodiment, the base resins may be acrylate-based resins, and the acrylate-based resins may be polymers of acrylic monomers. For example, the acrylic monomers may be multifunctional acrylate. According to another embodiment, the sealant may contain monomer substances in addition to the base resins. For example, the monomer substances may be monofunctional acrylate. In the specification, the monofunctional acrylate may mean compounds having one acryl group, and the multifunctional acrylate may mean compounds having two or more acryl groups. The curable resins may be cured by UV irradiation and/or heating. The UV irradiation condition or heat condition may be performed appropriately within the scope that does not damage the objective of the present disclosure. In case of need, the sealant may contain an initiator, for example, an optical initiator or a heat initiator.

The sealant may be provided in a method commonly used in the art and, for example, may be formed drawing a sealant at an outer portion of the liquid crystal layer (i.e., inactivate region) with a dispenser having a nozzle.

The spacer may include at least one spacer among a ball spacer and a column spacer, and specifically, may preferably be a ball spacer. The ball spacer may include one or more ball spacers and preferably has a diameter ranging from 1 to 10 μm. Furthermore, when viewed in a planar direction, a region where the ball spacer is occupied in the liquid crystal layer 300 is preferably 0.01 to 10% of the area of the liquid crystal layer 300 in an aspect of improvement of user's visibility and transmittance in a light transmissive mode.

According to the embodiment, the liquid crystal layer 300 may include an alignment film 400 if necessary (referring to FIG. 4) and, alignment films 400, for example, may be formed on opposite surfaces of the liquid crystal layer 300 including liquid crystal compounds.

The alignment film 400 is not particularly limited as long as it adds the orientation to the liquid crystal compounds. For example, the alignment film 400 may be manufactured by coating and curing an alignment film coating composition containing aligned polymers, a photopolymerization initiator, and solvent. Although the aligned polymer is not particularly limited, the aligned polymer may be polyacrylate-based resin, polyamic resin, polyimide-based resin, polymer having cinnamate groups, etc. and may use polymer capable of expressing orientation, the polymer being currently developed or to be developed.

The variable transmittance optical stack of the present disclosure may include other members without affecting the objectives of the present disclosure and, for example, may include the pressure-sensitive adhesive/adhesive layer 500 (referring to 4B) and may include an ultraviolet ray absorption layer, a hard coating layer, etc.

The pressure-sensitive adhesive/adhesive layer 500 may be formed using an adhesive or a pressure-sensitive adhesive, and have appropriate pressure sensitive adhesion/adhesion to prevent peeling, bubbles, etc. from occurring when handling the optical stack, and preferably have transparency and thermal stability.

The adhesive may be an adhesive currently developed or to be developed, for example, may use photocurable adhesive.

The photocurable adhesive provides strong adhesion by being crosslinked and cured by receiving active energy rays such as ultraviolet (UV), electron beam (EB), etc., and may be composed of reactive oligomers, reactive monomers, a photopolymerization initiator, and the like.

The reactive oligomers are important components that determine the properties of adhesive, and form polymer binding by photopolymerization to form a cured film. For example, the available oligomers may be polyester-based resin, polyether-based resin, polyurethane-based resin, epoxy-based resin, polyacryl-based resin, silicon-based resin, and the like.

The reactive monomers may serve as crosslinker, diluent of the reactive oligomers described above, and affect adhesion characteristics. For example, the available reactive monomers may be monofunctional monomers, multifunctional monomers, epoxy-based monomers, vinyl ethers, cyclic ethers, and the like.

The photopolymerization initiator may absorb light energy to generate radicals or cations to initiate photopolymerization, and a proper type may be selected and used depending on photopolymerization resin.

The pressure-sensitive adhesive may use a pressure-sensitive adhesive currently developed or to be developed. According to one or a plurality of embodiments, as the pressure-sensitive adhesive, acryl-based pressure-sensitive adhesive, rubber-based pressure-sensitive adhesive, silicon-based pressure-sensitive adhesive, urethane-based pressure-sensitive adhesive, polyvinyl alcohol-based pressure-sensitive adhesive, polyvinyl pyrrolidone-based pressure sensitive adhesive, polyacrylamide-based pressure sensitive adhesive, cellulose-based pressure sensitive adhesive, vinylalky ether-based pressure sensitive adhesive and the like. The pressure-sensitive adhesive is not particularly limited as long as it has pressure-sensitive adhesion and viscoelasticity. For ease of acquisition, preferably, the pressure-sensitive adhesive may include acryl-based pressure-sensitive adhesive, for example, may be (meth) acrylate copolymers, crosslinkers, solvents, and the like.

The crosslinkers may be crosslinkers currently developed or to be developed and, for example, polyisocyanate compounds, epoxy resins, melamine resins, urea resins, dialdehydes, methylol polymers, etc., and may preferably contain polyisocyanate compounds.

The solvents may include common solvents used in the field of resin compositions. For example, the solvents may use solvents such as: alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or combination of two or more types.

The thickness of the pressure sensitive adhesive/adhesive layer 500 may be appropriately determined depending on a type of resins serving as the pressure sensitive adhesive/adhesive, the strength of the pressure sensitive adhesive/adhesive, the environment where the pressure sensitive adhesive/adhesive is used, and the like. According to an embodiment, the pressure sensitive adhesive/adhesive layer may have a thickness ranging from 0.01 to 50 $\mu$m in order to ensure sufficient adhesion and minimize the thickness of the optical stack and, preferably, may have a thickness ranging from 0.05 to 20 $\mu$m and, more preferably, may have a thickness ranging from 0.1 to 10 $\mu$m.

The ultraviolet ray absorption layer is not particularly limited as long as it is to prevent deterioration of the optical stack due to UV rays. For example, the ultraviolet ray absorption layer may use salicylic acid-based ultraviolet absorber (phenyl salicylate, p-tert-butylsalicylate, etc.), benzophenone-based ultraviolet absorber(2,4-dihydroxybenzophenone, 2,2'-dihydroxy-4,4'-dimethoxybenzophenone, etc.), benzotriazole-based ultraviolet absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimide methyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxicarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazole-2-yl)-6-(linear and side chain dodecyl)-4-methylphenol, octyl-3-[3-tert-butyl-4-hydroxy-5-(chloro-2H-benzotriazole-2-yl)phenyl]propionate and 2-ethylhexyl-3-[tert-butyl-4-hydroxy-5-(5-chloro-2H-benzotriazole-2-yl)phenyl]propionate compounds, etc.), cyanoacrylate-based ultraviolet absorber(2'-ethylhexyl-2-cyano-3,3-diphenylacrylate, ethyl-2-cyano-3-(3',4'-methylene dioxyphenyl)-acrylate, etc.), triazine-based ultraviolet absorber, etc.. The benzotriazole-based ultraviolet absorber or the triazine-based ultraviolet absorber that have high transparency and the excellent effect of preventing deterioration of the polarizing plate or the variable transmittance layer may be preferably used as the ultraviolet ray absorption layer, and the benzotriazole-based ultraviolet absorber having more appropriate spectral absorption spectroscopy absorption spectrum may be preferable. The benzotriazole-based ultraviolet absorber may be changed into "-Bis" and, for example, may be 6,6'-methylene bis (2-(2H-benzo[d][1,2,3]triazole-2-yl)-4-(2,4,4-trimethylpentane-2-yl)phenol), 6,6'-methylene bis (2-(2H-benzo[d][1,2,3]triazole-2-yl)-4-(2-hydroxyethyl)phenol), etc.

The hard coating layer is not particularly limited as long as it is to protect members such as the polarizing plate, the variable transmittance layer, etc. from external physical and chemical shocks, and hard coating layers currently developed or to be developed may be used thereto.

According to the embodiment, the hard coating layer may be formed by applying compositions for forming a hard coating layer on another member and then curing the layer with light or heat. The compositions for forming a hard coating layer are not particularly limited and, for example, may include photocurable compounds and a photoinitiator.

As the photocurable compounds and the photoinitiator, those commonly used in the art can be used without limitation, for example, the photocurable compounds may be photopolymerizable monomers, photopolymerizable oligomers, etc., for example, may be monofunctional and/or multifunctional (meth) acrylate, and the photoinitiator may be an oxime ester-based photoinitiator, etc.

In addition to the variable transmittance optical stack, the present disclosure includes a smart window including the same. Furthermore, the present disclosure includes a vehicle in which the smart window is applied to at least one of front windows, rear windows, side windows, sunroof windows, and inner partitions, and a building window including the smart window.

Mode for Invention

Hereinbelow, an embodiment of the present disclosure will be described in detail. However, the present disclosure may not be limited to embodiments disclosed below and may be implemented in various shapes, and the embodiments merely ensure that the present disclosure of the present disclosure is complete and is provided to fully inform those skilled in the art of the scope of the invention, and may be defined by the scope of the claims.

## Example and comparative example: manufacturing electrode stack member

### Example

A polarizing plate (outdoor side polarizing plate) is manufactured by bonding a cellulose triacetate film (25μm TAC, manufactured by Konica) and a cyclo-olefin film (23μm COP, manufactured by Zeon) on opposite surfaces of a polyvinyl alcohol-based polarizer (12μm) with an adhesive.

Thereafter, when the transparent conductive layer with a thickness of 100nm is formed by applying a PEDOT composition on a cyclo-olefin film surface of the polarizing plate and then by drying the surface at 90°C for about 5 to 10, the electrode stack member of the example including the transparent conductive layer formed of a conductive polymer on one surface of the polarizing plate is manufactured.

The PEDOT composition is manufactured by mixing a coating solution 1 and a coating solution 2 in a ratio of 1:1. The coating solution 1 uses a mixture of 60 to 65 % by weight of ethenyl benzenesulfonic acid homopolymer compound with 2,3-dihydrothieno[3,4-b]-1,4-dioxin homopolymer(water based), 15 to 20 % by weight of ethyl alcohol, and 20 to 25 % by weight of deionized water, with respect to the total weight of the coating solution. The coating solution 2 uses a mixture of 0.5 to 1.0 % by weight of polyester resin (solid content 25%, water based), 65 to 75 % by weight of ethyl alcohol, and 20 to 25 % by weight of deionized water, with respect to the total weight of the coating solution.

### Comparative example

A polarizing plate (outdoor side polarizing plate) is manufactured by bonding a cellulose triacetate film (25μm TAC, manufactured by Konica) and a cyclo-olefin film (23μm COP, manufactured by Zeon) on opposite surfaces of a polyvinyl alcohol-based polarizer (12μm) with an adhesive.

Thereafter, the electrode stack member of the comparative example including the transparent conductive layer formed of ITO on one surface of the polarizing plate is manufactured by forming a transparent conductive layer having thickness of 100nm on a surface of the cyclo-olefin film of the absorbing polarizing plate by sputtering ITO.

**Experimental example: evaluation of crack density and surface resistance increase rate**

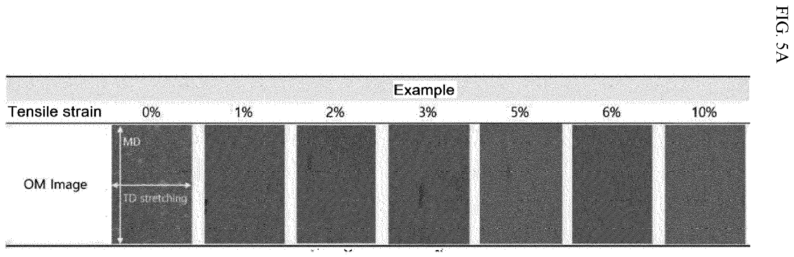

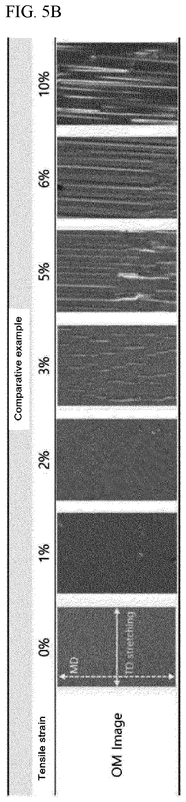

For the electrode stack members of the example and the comparative example, for each tensile strain 0%, 1%, 2%, 3%, 5%, 6%, and 10% in a transverse direction (TD), images of the transparent conductive layer in the observed region captured using an optical microscope are shown in FIGS. 5A and 5B, and each crack density and surface resistance increase rate is calculated by Equation 1 and 2, and results are shown in Table 1.

[Table 1]

| | Example | | | | | | |
|---|---|---|---|---|---|---|---|
| Tensile strain (%) | 0 | 1 | 2 | 3 | 5 | 6 | 10 |
| Crack density value | 0 | 0 | 0 | 0 | 0 | 0 | 0 |
| Surface resistance value ($\Omega/\square$) | 151 | 168 | 170 | 172 | 170 | 168 | 171 |
| Surface resistance increase rate (%) | - | 11.26 | 12.58 | 13.91 | 12.58 | 11.26 | 13.25 |
| | Comparative example | | | | | | |
| Tensile strain (%) | 0 | 1 | 2 | 3 | 5 | 6 | 10 |
| Crack density value | 0 | 0 | 0.09 | 0.23 | 0.40 | 0.58 | 0.72 |
| Surface resistance value ($\Omega/\square$) | 130 | 269 | 1800 | 2100 | 3700 | 5800 | 4900000 |
| Surface resistance increase rate (%) | - | 106.92 | 1284.62 | 1515.39 | 2746.15 | 4361.54 | 3769131 |

Referring to Table 1 and FIG. 5, for the electrode stack member of the example including the transparent conductive layer formed of a conductive polymer, a crack density value, in tensile strain greater than 0% and less than or equal to 10%, is 0 (zero), and a surface resistance increase rate, in tensile strain equal to or greater than 1% and less than or equal to 10%, ranges from 11.26% to 13.91%.

Meanwhile, for the electrode stack member of the comparative example including the transparent conductive layer formed of ITO, a crack density value, in tensile strain, ranges from 0.09 to 0.72, and a surface resistance increase rate, in tensile strain equal to or greater than 1% and less than or equal to 10%, ranges from 106.92% to 3,769,131%.

In other words, in tensile strain greater than 1% and less than or equal to 10%, the electrode stack member of the comparative example has cracks with a crack density value greater than 0.05. However, the electrode stack member of the example has no crack with a crack density value at 0. Therefore, it can be seen that the electrode stack member of the example is excellent in the effect of preventing cracks.

Furthermore, in tensile strain equal to or greater than 1% and less than or equal to 10%, surface resistance of the electrode stack member of the comparative example increased more than twice, and surface resistance of the electrode stack member of the example increases within 15%. Therefore, it can be seen that the electrode stack member of the example is excellent in the effect of reducing surface resistance increase rate.

**Industrial Applicability**

According to the variable transmittance optical stack according to the present disclosure, the conductive layer contains a conductive polymer material to prevent cracks from occurring in response to change in external stress, so that the driving stability for various forms can be improved in comparison to the conventional optical stack.

**Claims**

1. A variable transmittance optical stack comprising:

   a first polarizing plate;
   a first transparent conductive layer formed on one surface of the first polarizing plate;
   a second polarizing plate opposing the first polarizing plate;
   a second transparent conductive layer formed on one surface of the second polarizing plate, and opposing the first transparent conductive layer; and
   a liquid crystal layer provided between the first transparent conductive layer and the second transparent conductive layer,

wherein at least one transparent conductive layer of the first transparent conductive layer and the second transparent conductive layer is formed by directly contacting with any one polarizing plate of the first polarizing plate and the second polarizing plate,

at least one transparent conductive layer of the first transparent conductive layer and the second transparent conductive layer comprises conductive polymers, and

at least one transparent conductive layer of the first transparent conductive layer and the second transparent conductive layer has at least one value of 0 to 0.05 among crack density values calculated according to following Equation 1, at a tensile strain greater than 1% and less than or equal to 10%.

[Equation 1]

$$\rho(\varepsilon) = \ell(\varepsilon)/A$$

(In Equation 1, $\varepsilon$ is tensile strain (%), A is an area (mm$^2$) of an observed region, $\rho(\varepsilon)$ is a crack density value of the transparent conductive layer calculated at the tensile strain $\varepsilon$, and $\ell(\varepsilon)$ is a crack area (mm$^2$) of the transparent conductive layer in the observed region A calculated at the tensile strain $\varepsilon$.)

2. The variable transmittance optical stack of claim 1, wherein at least one transparent conductive layer of the first transparent conductive layer and the second transparent conductive layer has a crack density value of 0, which is calculated according to Equation 1 when $\varepsilon$ is 2%.

3. The variable transmittance optical stack of claim 1, wherein at least one transparent conductive layer of the first transparent conductive layer and the second transparent conductive layer has at least one increase rate of 15% or less among surface resistance increase rates calculated according to following Equation 2, at the tensile strain equal to or greater than 1% and equal to or less than 10%.

[Equation 2]

$$\delta(\varepsilon) = [\{R.S(\varepsilon)/R.S(0)\}-1] * 100$$

(in Equation 2, $\delta(\varepsilon)$ is a surface resistance increase rate (%) of the transparent conductive layer calculated at the tensile strain $\varepsilon$, R.S($\varepsilon$) is a surface resistance value ($\Omega/\square$) of the transparent conductive layer measured from tensile strain $\varepsilon$, R.S(0) is a surface resistance value ($\Omega/\square$) of the transparent conductive layer measured from an initial state where the tensile strain is at 0%, and $\varepsilon$ has the same meaning as Equation 1.)

4. The variable transmittance optical stack of claim 3, wherein at least one transparent conductive layer of the first transparent conductive layer and the second transparent conductive layer has a surface resistance increase rate of 15% or less, which is calculated according to the Equation 2, when $\varepsilon$ is 1%.

5. The variable transmittance optical stack of claim 1, wherein the conductive polymers comprise one or more types selected from a group consisting of polythiophene, poly(3,4-ethylene dioxythiophene), polyaniline, polyacetylene, polydiacetylene, polyphenylene, polyphenylenevinylene, polyphenylene sulfide, polythienylene vinylene, polythiophene vinylene, polyfluorene, polypyrrole, poly(3,4-ethylene dioxythiophene): polystyrene sulfonate, poly(3,4-ethylene dioxythiophene): camphor sulfonic acid, poly(3,4-ethylene dioxythiophene):toluenesulfonic acid, poly(3,4-ethylene dioxythiophene): dodecylbenzene sulfonic acid, polyaniline: polystyrene sulfonate, polyaniline: camphor sulfonic acid, polypyrrole: polystyrene sulfonate, polypyrrole: camphor sulfonic acid, polypyrrole:toluenesulfonic acid, polypyrrole: dodecylbenzene sulfonic acid, polythiophene: polystyrene sulfonate, polythiophene: camphor sulfonic acid, polythiophene:toluenesulfonic acid, and polythiophene: dodecylbenzene sulfonic acid.

6. The variable transmittance optical stack of claim 1, wherein at least one transparent conductive layer of the first transparent conductive layer and the second transparent conductive layer is formed by directly contacting with any one polarizing plate of the first polarizing plate and the second polarizing plate without an additional substrate between the polarizing plate and the transparent conductive layer.

7. The variable transmittance optical stack of claim 1, wherein at least one transparent conductive layer of the first transparent conductive layer and the second transparent conductive layer is formed by directly contacting with any one polarizing plate of the first polarizing plate and the second polarizing plate with a highly adhesive layer between the polarizing plate and the transparent conductive layer.

8. The variable transmittance optical stack of claim 1, wherein at least one polarizing plate of the first polarizing plate and the second polarizing plate comprises one or more types of functional layers selected from a group consisting of a protective layer, a retardation matching layer, and a refractive index-matching layer.

9. The variable transmittance optical stack of claim 1, wherein the first polarizing plate and the second polarizing plate have a thickness ranging from $30\mu$m to $200\mu$m.

10. The variable transmittance optical stack of claim 1, wherein the liquid crystal layer comprises one or more types selected from a group consisting of a ball spacer and a column spacer.

11. The variable transmittance optical stack of claim 10, wherein the ball spacer has a diameter ranging from $1\mu$m to $10\mu$m.

12. The variable transmittance optical stack of claim 10, wherein an occupancy area of the ball spacer in the liquid crystal layer ranges from 0.01 to 10% of the area of the liquid crystal layer.

13. The variable transmittance optical stack of claim 1, further comprising:
one or more types selected from a group consisting of an alignment film, a pressure sensitive adhesive/adhesive layer, an ultraviolet ray absorption layer, and a hard coating layer.

14. A manufacturing method for the variable transmittance optical stack of any one of claims 1 to 13.

15. A smart window comprising the variable transmittance optical stack of any one of claims 1 to 13.

16. An automobile in which the smart window of claim 15 is applied to at least one of a front window, a rear window, a side window, a sunroof window, and an inner partition thereof.

17. A window and a door for a building comprising the smart window of claim 15.

FIG. 1

```
                                    ~100-1
                                    ~200-1
                                    ~300
                                    ~200-2
                                    ~100-2
```

FIG. 2A

```
                    ~120  ⎫
                          ⎬ 100
                    ~110  ⎭
```

FIG. 2B

```
                    ~120  ⎫
                    ~110  ⎬ 100
                    ~120  ⎭
```

FIG. 2C

```
                    ~120  ⎫
                    ~110  ⎬ 100
                    ~130  ⎭
```

FIG. 2D

FIG. 2E

FIG. 3

FIG. 4A

- 100-1
- 200-1
- 400
- 300
- 400
- 200-2
- 100-2

FIG. 4B

- 100-1
- 200-1
- 400
- 300
- 400
- 200-2
- 100-2
- 500

FIG. 5A

FIG. 5B

## INTERNATIONAL SEARCH REPORT

| International application No. |
|---|
| **PCT/KR2022/014003** |

**A. CLASSIFICATION OF SUBJECT MATTER**

**G02F 1/137**(2006.01)i; **G02B 5/30**(2006.01)i; **G02F 1/1335**(2006.01)i; **G02F 1/1337**(2006.01)i

According to International Patent Classification (IPC) or to both national classification and IPC

**B. FIELDS SEARCHED**

Minimum documentation searched (classification system followed by classification symbols)

G02F 1/137(2006.01); B32B 7/12(2006.01); C09J 133/00(2006.01); G02B 5/30(2006.01); G02F 1/01(2006.01); G02F 1/1335(2006.01); G02F 1/1337(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 편광판(polarizing plate), 투명 도전층(transparent conductive layer), 액정층(liquid crystal layer), 변형률(deformation rate), 투과율 가변 광학 적층체(optical laminate with variable transmittance)

**C. DOCUMENTS CONSIDERED TO BE RELEVANT**

| Category* | Citation of document, with indication, where appropriate, of the relevant passages | Relevant to claim No. |
|---|---|---|
| A | KR 10-2015-0105266 A (LG CHEM, LTD.) 16 September 2015 (2015-09-16)<br>See paragraphs [0005] and [0040]; and figure 1. | 1-17 |
| A | JP 2020-160427 A (NITTO DENKO CORP.) 01 October 2020 (2020-10-01)<br>See paragraph [0087]; and claim 2. | 1-17 |
| A | KR 10-2016-0025494 A (NITTO DENKO CORPORATION) 08 March 2016 (2016-03-08)<br>See paragraphs [0108]-[0136]; and figure 1. | 1-17 |
| A | JP 2020-144199 A (NITTO DENKO CORP.) 10 September 2020 (2020-09-10)<br>See paragraphs [0020]-[0110]; and figure 1. | 1-17 |
| A | KR 10-2018-0120316 A (LG CHEM, LTD.) 06 November 2018 (2018-11-06)<br>See paragraphs [0008]-[0075]; and figure 1. | 1-17 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 December 2022** | **27 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/014003**

| Patent document cited in search report | | | Publication date (day/month/year) | Patent family member(s) | | | Publication date (day/month/year) |
|---|---|---|---|---|---|---|---|
| KR | 10-2015-0105266 | A | 16 September 2015 | CN | 105723275 | A | 29 June 2016 |
| | | | | CN | 105723275 | B | 11 June 2019 |
| | | | | CN | 105874379 | A | 17 August 2016 |
| | | | | CN | 105874379 | B | 01 October 2019 |
| | | | | EP | 3115832 | A1 | 11 January 2017 |
| | | | | EP | 3115832 | B1 | 20 February 2019 |
| | | | | EP | 3115834 | A1 | 11 January 2017 |
| | | | | EP | 3115834 | B1 | 30 January 2019 |
| | | | | JP | 2017-508169 | A | 23 March 2017 |
| | | | | JP | 2017-508997 | A | 30 March 2017 |
| | | | | JP | 6326693 | B2 | 23 May 2018 |
| | | | | JP | 6450998 | B2 | 16 January 2019 |
| | | | | KR | 10-1630118 | B1 | 13 June 2016 |
| | | | | KR | 10-1630119 | B1 | 13 June 2016 |
| | | | | KR | 10-2015-0105249 | A | 16 September 2015 |
| | | | | TW | 201539097 | A | 16 October 2015 |
| | | | | TW | 201602678 | A | 16 January 2016 |
| | | | | TW | I536087 | B | 01 June 2016 |
| | | | | TW | I599814 | B | 21 September 2017 |
| | | | | US | 2016-0291357 | A1 | 06 October 2016 |
| | | | | US | 2016-0377902 | A1 | 29 December 2016 |
| | | | | US | 9904129 | B2 | 27 February 2018 |
| | | | | US | 9958742 | B2 | 01 May 2018 |
| | | | | WO | 2015-133862 | A1 | 11 September 2015 |
| | | | | WO | 2015-133878 | A1 | 11 September 2015 |
| JP | 2020-160427 | A | 01 October 2020 | CN | 113366351 | A | 07 September 2021 |
| | | | | KR | 10-2021-0140738 | A | 23 November 2021 |
| | | | | TW | 202036036 | A | 01 October 2020 |
| | | | | WO | 2020-188871 | A1 | 24 September 2020 |
| KR | 10-2016-0025494 | A | 08 March 2016 | CN | 105339455 | A | 17 February 2016 |
| | | | | CN | 105339455 | B | 14 September 2018 |
| | | | | CN | 105339816 | A | 17 February 2016 |
| | | | | CN | 105339816 | B | 05 February 2019 |
| | | | | CN | 105358648 | A | 24 February 2016 |
| | | | | CN | 105358648 | B | 26 October 2018 |
| | | | | CN | 105358649 | A | 24 February 2016 |
| | | | | CN | 105358649 | B | 22 November 2019 |
| | | | | JP | 2015-028138 | A | 12 February 2015 |
| | | | | JP | 2015-071740 | A | 16 April 2015 |
| | | | | JP | 2015-145491 | A | 13 August 2015 |
| | | | | JP | 2015-146013 | A | 13 August 2015 |
| | | | | JP | 6363410 | B2 | 25 July 2018 |
| | | | | JP | 6472172 | B2 | 20 February 2019 |
| | | | | JP | 6505383 | B2 | 24 April 2019 |
| | | | | JP | 6522289 | B2 | 29 May 2019 |
| | | | | KR | 10-2016-0025509 | A | 08 March 2016 |
| | | | | KR | 10-2016-0026894 | A | 09 March 2016 |
| | | | | KR | 10-2016-0027012 | A | 09 March 2016 |
| | | | | KR | 10-2206692 | B1 | 22 January 2021 |
| | | | | KR | 10-2230320 | B1 | 19 March 2021 |

Form PCT/ISA/210 (patent family annex) (July 2022)

INTERNATIONAL SEARCH REPORT

**Information on patent family members**

International application No.

**PCT/KR2022/014003**

| Patent document cited in search report | | | Publication date (day/month/year) | Patent family member(s) | | | Publication date (day/month/year) |
|---|---|---|---|---|---|---|---|
| | | | | KR | 10-2250919 | B1 | 11 May 2021 |
| | | | | KR | 10-2281964 | B1 | 26 July 2021 |
| | | | | TW | 201504378 | A | 01 February 2015 |
| | | | | TW | 201510134 | A | 16 March 2015 |
| | | | | TW | 201510145 | A | 16 March 2015 |
| | | | | TW | 201510154 | A | 16 March 2015 |
| | | | | TW | I634176 | B | 01 September 2018 |
| | | | | TW | I664261 | B | 01 July 2019 |
| | | | | TW | I666281 | B | 21 July 2019 |
| | | | | TW | I695048 | B | 01 June 2020 |
| | | | | US | 10883022 | B2 | 05 January 2021 |
| | | | | US | 2016-0130478 | A1 | 12 May 2016 |
| | | | | WO | 2014-208550 | A1 | 31 December 2014 |
| | | | | WO | 2014-208695 | A1 | 31 December 2014 |
| | | | | WO | 2014-208696 | A1 | 31 December 2014 |
| | | | | WO | 2014-208699 | A1 | 31 December 2014 |
| JP | 2020-144199 | A | 10 September 2020 | CN | 113597459 | A | 02 November 2021 |
| | | | | KR | 10-2021-0134718 | A | 10 November 2021 |
| | | | | TW | 202039738 | A | 01 November 2020 |
| | | | | WO | 2020-179509 | A1 | 10 September 2020 |
| KR | 10-2018-0120316 | A | 06 November 2018 | KR | 10-2108563 | B1 | 08 May 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018010035 A